# EUROPÄISCHE PATENTSCHRIFT

(11) **EP 3 528 999 B1**
(45) Veröffentlichungstag und Bekanntmachung des Hinweises auf die Patenterteilung: **16.12.2020**
(21) Anmeldenummer: 17812249.5
(22) Anmeldetag: 19.10.2017
(51) Int. Cl.: B23Q 3/155, B21D 5/02, B21D 37/04, B21D 37/14, H01F 7/00

(54) **BESCHICKUNGSVERFAHREN FÜR EINE WERKZEUGMASCHINE UND WERKZEUG-TRANSFERVORRICHTUNG**
LOADING METHOD FOR A MACHINE TOOL AND TOOL TRANSFER DEVICE
PROCÉDÉ DE CHARGEMENT POUR UNE MACHINE-OUTIL ET DISPOSITIF DE TRANSFERT D'OUTIL

(30) Priorität: 20.10.2016 AT 509602016
(43) Veröffentlichungstag der Anmeldung: 28.08.2019
(73) Patentinhaber: TRUMPF Maschinen Austria GmbH & Co. KG., 4061 Pasching (AT)
(72) Erfinder: TIRAFERRI, Matteo, 10040 San Gillio (TO) (IT); TONDA ROCH, Andrea, 10141 Torino (IT); VIDOTTO, Giovanni, 10023 Chieri (TO) (IT)
(74) Vertreter: Burger, Hannes
(86) Internationale Anmeldenummer: PCT/AT2017/060277
(87) Internationale Veröffentlichungsnummer: WO 2018/071945

(56) Entgegenhaltungen:
- EP-A1- 2 946 846
- WO-A1-2016/109862
- DE-A1- 3 212 465
- FR-A1- 2 791 590
- JP-A- H10 192 988
- US-A- 5 595 560

## Beschreibung

Die Erfindung betrifft ein Beschickungsverfahren für eine Werkzeugmaschine, insbesondere für eine Biegemaschine und eine Werkzeug-Transfervorrichtung.

Werkzeugmaschinen weisen zumeist einen Maschinenrahmen auf, in welchem Arbeitsmittel angeordnet sind, die eine Bearbeitungskraft auf ein Werkstück einleiten können, um dieses umzuformen. Um eine werkstückangepasste Krafteinwirkung zu ermöglichen, weisen die Arbeitsmittel zumeist Werkzeugaufnahmen auf, in welchem spezifisch ausgebildete Bearbeitungswerkzeuge eingelegt bzw. angeordnet werden können. Zur Durchführung der einzelnen Bearbeitungsschritte ist es erforderlich, die Bearbeitungswerkzeuge zu tauschen bzw. in ihrer Position zu verändern. Dazu wird zumeist die Werkzeugaufnahme entriegelt, sodass die darin angeordneten Bearbeitungswerkzeuge manipulierbar werden. Bei einer Biegemaschine ist die Werkzeugaufnahme geradlinig ausgebildet und erstreckt sich über die gesamte Länge des Pressbalkens. Im Fall einer manuellen Umkonfiguration der Bearbeitungswerkzeuge, muss vom Maschinenbediener jedes einzelne Bearbeitungswerkzeug gefasst und aus der Werkzeugaufnahme entnommen bzw. in der Werkzeugaufnahme verschoben werden. Dies ist bei kleinen Werkzeugen für die Bearbeitung leichter Werkstoffe, wie bspw. dünne Bleche, noch einfach möglich, bei Werkzeugen für die Bearbeitung von schweren Bauteilen, erfordert dies eine beträchtliche Kraftanstrengung bzw. ist dies manuell nicht mehr möglich.

Bekannt sind Systeme bzw. Vorrichtungen, bei denen Bearbeitungswerkzeuge, im Weiteren werden darunter Biegewerkzeuge verstanden, mittels eines Greifers von vorne bzw. vom Maschineninnenraum der Biegemaschine gegriffen und entnommen bzw. verschoben werden. Dies erfordert jedoch einen Manipulationsroboter, der ggf. im Vorderbereich der Maschine Manipulationshandlungen durchführt, wobei sichergestellt werden muss, dass keine Personen durch die Manipulationshandlungen gefährdet werden. Es ist auch bekannt, ein Paket von eingelegten Biegewerkzeugen, mittels einer Ausschubvorrichtung von der Werkzeugaufnahme auf eine in Längserstreckung des Pressbalkens seitlich angeordneten Aufnahmevorrichtung auszuschieben, wonach diese Aufnahmevorrichtung in eine Parkposition bzw. in einen Werkzeugspeicher bewegt wird.

Eine weitere Möglichkeit ist in EP 2946846 A1, das für die Oberbegriffe der unabhängigen Ansprüche 1 und 13 eine Basis bereitstellt, offenbart, worin eine Werkzeugwechselvorrichtung für eine Umformpresse mit einem Werkzeugmagazin und einer Übertragungsvorrichtung zur Übertragung der Umformwerkzeuge vom Werkzeugmagazin zur Umformpresse vorgestellt wird, wobei die eine Übertragungsvorrichtung eine antreibbare Schubkette umfasst. Die Übertragungsvorrichtung umfasst weiters einen kabelgebundenen Elektromagneten zur Koppelung des Umformwerkzeuges.

Derartige Systeme zeichnen sich jedoch meist durch eine große Komplexität aus und erfordern meist größere Um- bzw. Anbauten an der Maschine.

Daneben gibt es noch Wechselvorrichtungen, welche darauf basieren, dass die verwendeten Bearbeitungswerkzeuge zumeist aus Metall sind und somit durch einen Magneten gehalten werden können. Dazu wird ein kleiner Halteschlitten entlang der Werkzeugaufnahme an das Bearbeitungswerkzeug herangeführt, bleibt aufgrund des im Halteschlitten angeordneten Magneten am Bearbeitungswerkzeug haften und kann dieses entlang der Werkzeugaufnahme abziehen bzw. in der Position verändern. Bei Erreichen einer Endposition wird die magnetische Haltekraft aufgehoben, wodurch sich Bearbeitungswerkzeug und Halteschlitten voneinander lösen. Nachteilig dabei ist jedoch, dass sich aufgrund des einwirkenden Magnetfeldes im metallischen Gegenstand, insbesondere im Bearbeitungswerkzeug und auch im Wechselschlitten, ein Restmagnetismus aufbaut. Dies kann dazu führen, dass Bearbeitungswerkzeuge aneinander haften bleiben und sich nicht mehr oder nur schwer voneinander lösen lassen. Ferner können sich metallische Ablagerungen, wie sie bei der Bearbeitung von metallischen Werkstücken anfallen können, an den Bearbeitungswerkzeugen und am Wechselschlitten anlagern. Auch kann es dazu kommen, dass die magnetisierten Bearbeitungswerkzeuge ein zu bearbeitendes leichtes Blech anziehen, wodurch sich die Ausrichtung des Werkstückes in Relation zur Werkzeugmaschine ändern kann, und somit eine fehlerhafte Bearbeitung des Werkstückes durchgeführt wird.

Die Aufgabe der Erfindung liegt nun darin, ein Verfahren und eine kompakte Vorrichtung zu schaffen, welche eine Manipulation metallischer Bearbeitungswerkzeuge in einer Werkzeugmaschine ermöglicht, wobei die Manipulationshandlungen keine Rückwirkung auf den bestimmungsgemäßen Einsatz der Bearbeitungswerkzeuge in der Werkzeugmaschine bzw. auf die Wechselvorrichtung haben.

Diese Aufgabe wird durch ein Verfahren gemäß dem unabhängigen Anspruch 1 und eine Vorrichtung gemäß dem unabhängigen Anspruch 13 gelöst.

Mit der Erfindung wird in vorteilhafter Weise erreicht, dass es durch die magnetische Aufnahme und Halterung zu keinem bleibenden Restmagnetismus im Bearbeitungswerkzeug kommt. Ein gegebenenfalls bestehender Restmagnetismus wird dadurch ebenso reduziert bzw. abgebaut. Somit kommt es zu keinen Störungen des Arbeitsablaufs durch metallische (Schmutz)Partikel oder durch zu bearbeitende, leichte Metallteile, die aufgrund eines Restmagnetismus am Bearbeitungswerkzeug anhaften.

Eine Weiterbildung besteht darin, dass, der Elektromagnet beim Aufheben der Haltekraft, von der Ansteuervorrichtung mit einem elektrischen Wechselstrom mit abnehmender Signalamplitude beaufschlagt wird. Beispielsweise kann der Wechselstrom, welcher per Definition gleichanteilsfrei ist, einen sinusförmigen Verlauf haben. Es sind jedoch auch andere Signalformen denkbar.

Nach einer Weiterbildung ist auch vorgesehen, dass die magnetische Haltevorrichtung zusätzlich einen Permanentmagnet aufweist, wobei der Elektromagnet beim Aufheben der Haltekraft, von der Ansteuervorrichtung mit einem gleichanteilbehafteten elektrischen Wechselsignal mit abnehmender Signalamplitude beaufschlagt wird. Der Vorteil dieser Ausführung liegt darin, dass sich der Energieaufwand für die Ansteuerung des Elektromagnets reduziert, da immer auch ein permanentes Magnetfeld zur Verfügung steht, dem das Magnetfeld des Elektromagnets überlagert wird. Zur Aufhebung des Magnetfelds muss das Ansteuerungssignal daher einen Gleichanteil aufweisen, der ein Magnetfeld erzeugt, dass gleich der Stärke des Permanentmagneten ist, aber die entgegengesetzte Feldrichtung aufweist. Somit werden sich die beiden Feldkomponenten aufheben und das resultierende Feld ist null. Als Signalform kann ebenfalls ein sinusförmiger Wechselstrom verwendet werden.

Die abnehmende Signalamplitude gemäß der beiden Weiterbildungen wird bevorzugt gemäß einer Exponentialfunktion, bspw. gemäß exp(-x), abnehmen. Somit wird eine sehr schnelle Reduktion eines Hauptanteils eines Restmagnetismus erreicht. Durch Wahl der Frequenz des Wechselsignals und der Entmagnetisierungsdauer kann ein sehr guter Abbau eines bestehenden Magnetfelds erreicht werden.

Nach einer Weiterbildung ist vorgesehen, dass bei der Aufnahme des Bearbeitungswerkzeugs, der Elektromagnet von der Ansteuervorrichtung mit einem elektrischen Aufnahme- und Haltesignal beaufschlagt wird.

Eine weitere Ausbildung besteht auch darin, dass die Stärke des Aufnahme- und Haltesignals von der Ansteuervorrichtung zwischen einer ersten Signalstärke bei der Aufnahme des Bearbeitungswerkzeugs, und einer zweiten Signalstärke beim Halten des Bearbeitungswerkzeugs umgeschaltet wird. Beispielsweise kann es von Vorteil sein, wenn kleine und somit leichte Bearbeitungswerkzeuge mit einer geringen magnetischen Haltekraft aufgenommen werden um zu verhindern, dass ein benachbartes Bearbeitungswerkzeug ebenfalls von der Magnetkraft angezogen wird. Um Energie zu sparen, kann bspw. während der Bewegung entlang der Führungsbahn die Magnetkraft reduziert werden. Es ist jedoch auch möglich die Magnetkraft bei der Bewegung zu erhöhen, um ein sicheres Halten bei hohen Fahrgeschwindigkeiten zu gewährleisten.

Dahingehend ist einer Weiterbildung vorteilhaft, nach der beim Halten des Bearbeitungswerkzeugs, die zweite Signalstärke des Aufnahme- und Haltesignals abgeschaltet wird. Wird bspw. das Bearbeitungswerkzeug von der Transfervorrichtung geschoben, ist gegebenenfalls keine Magnetkraft, oder nur einer sehr geringe, erforderlich, um das Bearbeitungswerkzeug sicher in Position zu halten. Somit kann wiederum eine Reduktion des Energieverbrauchs erreicht werden, bzw. wird die Zeit des Einwirkens der magnetischen Haltekraft auf das Bearbeitungswerkzeug reduziert, was wiederum zu einem geringeren residualen Magnetismus führt.

Eine vorteilhafte Weiterbildung besteht auch darin, dass vor Erreichen der Abgabeposition, die zweite Signalstärke des Aufnahme- und Haltesignals reduziert wird. Beim Anfahren der Aufnahme bzw. Abgabeposition von kleinen und damit leichten Bearbeitungswerkzeugen ist es von Vorteil, wenn vor Erreichen der Zielposition die Magnetkraft reduziert wird, um zu verhindern, dass bereits angeordneten Bearbeitungswerkzeuge unerwünscht angezogen werden.

Nach einer Weiterbildung ist vorgesehen, dass von einem, mit der Ansteuervorrichtung verbundenem Erfassungsmittel, ein Kennzeichnungsmerkmal des Bearbeitungswerkzeugs ausgelesen wird, und daraus von der Ansteuervorrichtung Werkzeug-Kenndaten extrahiert werden, insbesondere eine Werkzeugform, ein Werkzeuggewicht und/oder eine Werkzeuglänge. Die Kenndaten können bspw. direkt im Kennzeichnungsmerkmal hinterlegt sein. Es ist auch möglich, dass im Kennzeichnungsmerkmal lediglich eine Referenz hinterlegt ist, welche einen Bezug zu einem Eintrag in einer Kenndatentabelle hat. Diese Tabelle kann im der Transfervorrichtung, insbesondere in der Ansteuervorrichtung angeordnet sein. Es ist jedoch auch möglich, dass die Tabelle in einem Datenverarbeitungssystem abgelegt ist, welches mit der Ansteuervorrichtung datentechnisch verbunden ist, bspw. über eine drahtlose Datenverbindung.

Eine vorteilhafte Weiterbildung besteht ferner darin, dass basierend auf der extrahierten Werkzeugform, dem Werkzeuggewicht und/oder der Werkzeuglänge, von der Ansteuervorrichtung die erste und/oder die zweite Signalstärke aus einer hinterlegten Parametertabelle ausgelesen werden. Die erforderliche minimale Magnetkraft um das Bearbeitungswerkzeug zuverlässig aufnehmen und halten zu können, sowie die maximale Magnetkraft, um nicht ein benachbartes Bearbeitungswerkzeug ebenfalls aufzunehmen, hängen ganz wesentlich vom Werkzeuggewicht, der Werkzeuglänge und auch der Werkzeugform ab. Davon abhängig, werden sich unterschiedliche Reibungswiderstände zwischen Werkzeugaufnahme und Werkzeug einstellen, die direkt die minimal erforderliche Magnetkraft beeinflussen. Mit dieser Weiterbildung kann für jedes einzelne Bearbeitungswerkzeug die passende magnetische Haltekraft verwendet werden.

Nach einer Weiterbildung ist vorgesehen, dass das Aufnahme- und Haltesignals von der Ansteuervorrichtung als PWM-Signal (Pulsweitenmodulation) oder als PPM-Signal (Pulspausenmodulation) abgegeben wird. Details dieser Signale werden hierin nicht aufgeführt, da sie einem Fachmann bekannt sind.

Die Werkzeug-Transfervorrichtung weist einen mit der Ansteuervorrichtung verbundenen elektrischen Energiespeicher und einen mit dem Energiespeicher verbundenen Ladekontakt auf. Nach Bewegung der Werkzeug-Transfervorrichtung entlang der Führungsbahn in eine Parkposition, wird der Ladekontakt der Werkzeug-Transfervorrichtung mit einem Ladeanschluss der Warteposition in Verbindung gebracht. Somit wird es in vorteilhafter Weise möglich, den Energiespeicher der Werkzeug-Transfervorrichtung in den Beschickungspausen nachzuladen, sodass für den nächsten Beschickungsvorgang, ausreichend Energie zur Aufnahme und zum Halten und insbesondere zur Entmagnetisierung der Bearbeitungswerkzeuge zur Verfügung steht. Das Vorhandensein eines Energiespeichers hat den besonderen Vorteil, dass kein Energie-Versorgungskabel erforderlich ist, wodurch eine freiere Beweglichkeit der Werkzeug-Transfervorrichtung entlang der Führungsbahn möglich wird.

Eine Weiterbildung sieht ferner vor, dass die Werkzeug-Transfervorrichtung einen mit der Ansteuervorrichtung verbundenen Positionssensor aufweist, welcher die Position der Werkzeug-Transfervorrichtung längs der Führungsbahn ermittelt, und ein Erreichen der Aufnahmeposition und/oder ein Erreichen der Abgabeposition an die Ansteuervorrichtung übermittelt. Durch diese Weiterbildung kann von der Ansteuervorrichtung die magnetische Haltekraft am Weg entlang der Führungsbahn angepasst werden um dadurch einerseits Energie zu sparen und andererseits die Möglichkeit für ein sich im Bearbeitungswerkzeug aufbauendes Magnetfeld zu verringern.

Eine vorteilhafte Weiterbildung besteht auch darin, dass die Entmagnetisierung vor Erreichen der Abgabeposition durchgeführt wird, insbesondere unmittelbar vor dem Erreichen der Abgabeposition. Da die Entmagnetisierung etwas Zeit benötigt, und da am Beginn der Entmagnetisierung noch eine magnetische Haltekraft vorhanden ist, kann bereits am letzten Wegabschnitt entlang der Führungsbahn die Entmagnetisierung gestartet werden, sodass die Wartezeit an der Abgabeposition bis zum Abschluss der Entmagnetisierung verringert wird.

Die Aufgabe der Erfindung wird auch durch eine Werkzeug-Transfervorrichtung für ein Beschickungsverfahren gemäß dem Anspruch 13 gelöst.

Eine Weiterbildung besteht darin, dass das Außengehäuse (2) eine Energie- und/oder Datenschnittstelle aufweist, wodurch eine kompakte Ausführung der Transfervorrichtung möglich wird. Bei einer Ausführung als Energieschnittstelle ist eine Versorgung des Elektromagneten bzw. der Ansteuervorrichtung durch eine externe Energieversorgung möglich. Bei einer Ausführung als Datenschnittstelle kann ggf. die Ansteuervorrichtung auch ausgelagert sein bzw. ist eine selektivere Ansteuerung des Elektromagneten möglich, in den Parameter für das zu erzeugende

Im Gehäuse ist ein wieder aufladbarer Energiespeicher vorhanden ist, der mit einem Ladekontakt an einer Gehäuseaußenseite verbunden ist. Damit ist gewährleistet, dass eine Aufladung möglich ist, ohne dass das Gehäuse geöffnet werden muss, um zum Energiespeicher Zugriff zu bekommen.

Nach einer Weiterbildung ist auch vorgesehen, dass an einem hinteren stirnseitigen Ende des Gehäuses eine Anschlussvorrichtung für einen Manipulator vorgesehen ist. Die gegenständliche Werkzeug-Transfervorrichtung kann Teil einer Werkzeug-Verwaltungsvorrichtung sein, welche bspw. mehrere Bearbeitungsmaschinen bzw. Bearbeitungsplätze bedient. Hier kann es einen zentralen und universellen Manipulator geben, der über die Anschlussvorrichtung mit der spezifischen Werkzeug-Transfervorrichtung verbindbar ist.

Eine Weiterbildung besteht darin, dass die Führungsvorrichtung einen Antrieb aufweist, der zur Bewegung der Transfervorrichtung entlang der Führungsbahn ausgebildet ist. Dadurch ist eine eigenständige Werkzeug-Transfervorrichtung realisierbar, die selbsttätig eine Werkzeugmanipulation durchführen kann, und sich dabei entlang der Führungsbahn bewegt.

Nach einer Weiterbildung ist ferner vorgesehen, dass die Ansteuervorrichtung eine Tabelle aufweist, in welcher Werkzeug-Kenndaten und zugehörige Parameter eines Werkzeug Aufnahme- und Haltesignals hinterlegt sind. Durch Auslesen der Tabelleneinträge kann die Ansteuervorrichtung die Kenngrößen zur Erzeugung der magnetischen Haltekraft erhalten, um das Bearbeitungswerkzeug zuverlässig halten zu können, insbesondere die für das Werkzeuggewicht bzw. die Werkzeuggröße und/oder Werkzeugform minimal erforderliche Haltekraft.

Eine weitere mögliche Ausführungsform besteht darin, dass ein zweiter Elektromagnet in einem Abschnitt an der Führungsbahn angeordnet ist, der mit einem Wechselstrom konstanter Amplitude beaufschlagt wird. Bei der Vorbeibewegung der Transfervorrichtung am zweiten Elektromagneten kommt es zu einer Entmagnetisierung der Transfervorrichtung, da sich durch die Vorbeibewegung eine abnehmende Amplitude des magnetischen Kraftverlaufs einstellen wird. Dazu kann vorgesehen sein, dass der zweite Elektromagnet von einer Maschinensteuerung genau dann eingeschaltet wird, wenn sich die Transfervorrichtung, insbesondere das vordere stirnseitige Ende des Gehäuses, an der Position des zweiten Elektromagneten befindet.

Zum besseren Verständnis der Erfindung wird diese anhand der nachfolgenden Figuren näher erläutert.

Es zeigen jeweils in stark vereinfachter, schematischer Darstellung:
- Fig. 1: eine Blockdarstellung einer gegenständlichen Werkzeug-Transfervorrichtung;
- Fig. 2: ein System aus Werkzeugmaschine, Transfervorrichtung und Werkzeugspeicher;
- Fig. 3: verschiedene mögliche Betriebsarten der Werkzeug-Transfervorrichtung;
- Fig. 4: eine weitere mögliche Ausführung der gegenständlichen Werkzeug-Transfervorrichtung.

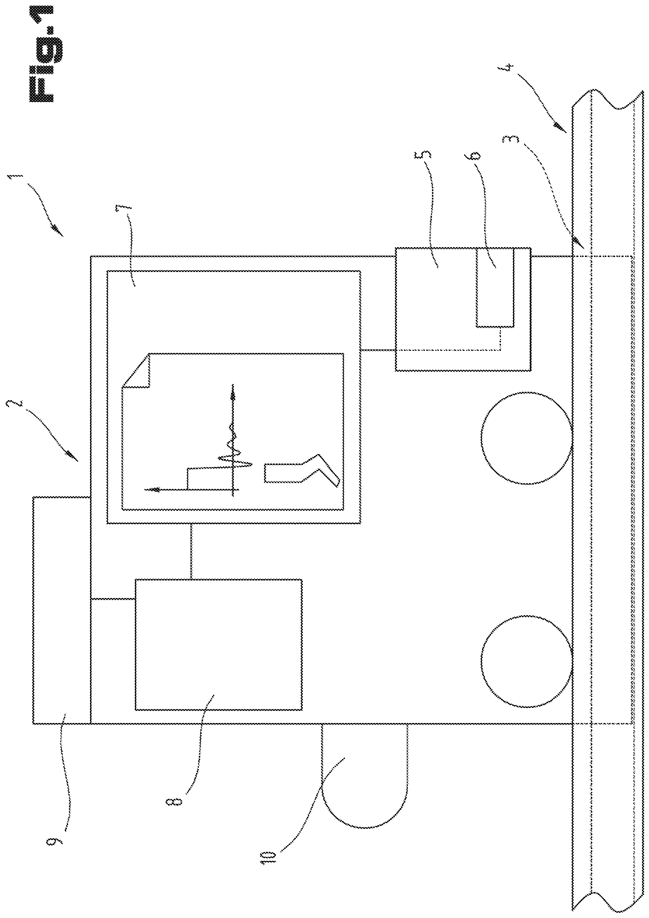

Fig. 1 zeigt eine Werkzeug-Transfervorrichtung 1 zur Verwendung im gegenständlichen Beschickungsverfahren. Die Werkzeug-Transfervorrichtung 1 weist ein Außengehäuse 2, eine Führungsvorrichtung 3 zur Aufnahme der Transfervorrichtung 1 in einer Führungsbahn 4 und eine, an einem vorderen stirnseitigen Ende des Gehäuses 2 angeordnete magnetische Haltevorrichtung 5 auf. Die Haltevorrichtung 5 weist ferner einen Elektromagnet 6 auf, welcher mit einer Ansteuervorrichtung 7 verbunden ist, welche zur Versorgung des Elektromagneten 6 mit einem elektrischen Entmagnetisierungssignal ausgebildet ist. Im Gehäuse 2 ist ferner ein wiederaufladbarer Energiespeicher 8 vorgesehen, der mit einem, an einer Gehäuseaußenseite vorgesehenen Ladekontakt 9 verbunden ist. Ferner ist am Gehäuse, insbesondere an einem hinteren, stirnseitigen Ende und der Haltevorrichtung 5 gegenüberliegend, eine Anschlussvorrichtung 10 für einen Manipulator vorgesehen.

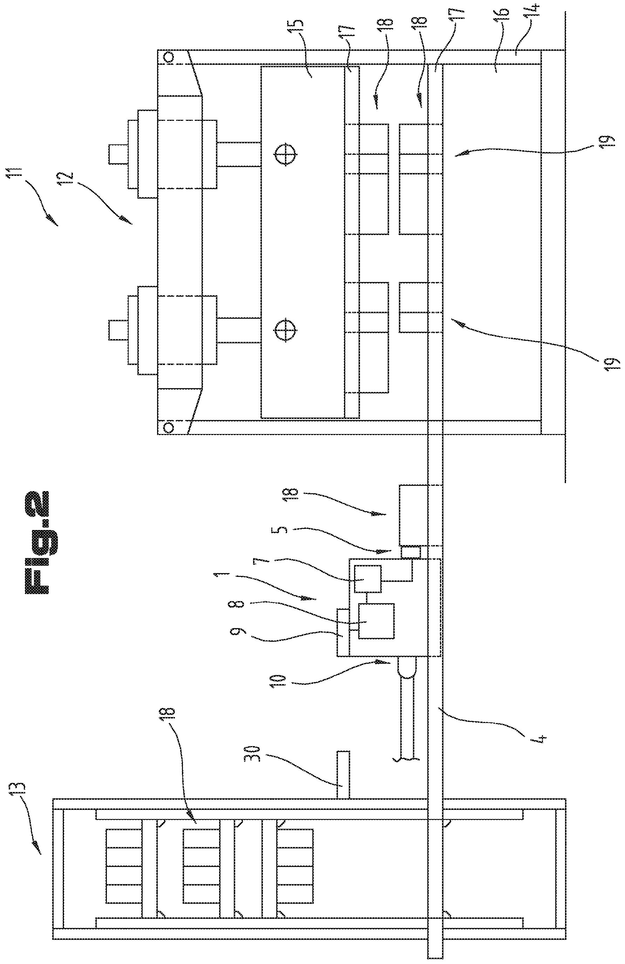

Fig. 2 zeigt ein Bearbeitungssystem 11 in dem mit einer Werkzeug-Transfervorrichtung 1 das gegenständliche Beschickungsverfahren durchgeführt wird. Das Bearbeitungssystem 11 umfasst eine Werkzeugmaschine 12, insbesondere eine Biegemaschine, und eine Werkzeugablage 13, welche über eine Führungsbahn 4 miteinander verbunden sind, wobei die Werkzeug-Transfervorrichtung 1 entlang dieser Führungsbahn 4 beweglich angeordnet ist.

Die Werkzeugmaschine 12 weist einen Maschinenrahmen 14 auf, welcher einen darin vertikal beweglichen Pressbalken 15 und einen festen Maschinentisch 16 aufweist. Auf weitere technische Details der Werkzeugmaschine 12, insbesondere einer Biegepresse, wird hierin nicht weiter eingegangen, da dies kein Beitrag zum gegenständlichen Beschickungsverfahren bzw. der Werkzeug-Transfervorrichtung liefert.

Das gegenständliche Beschickungsverfahren ist dazu ausgebildet, Bearbeitungswerkzeuge zwischen einer Aufnahme- und einer Abgabeposition zu bewegen. Darunter wird insbesondere verstanden, Werkzeuge aus einer Werkzeugablage 13, als Aufnahmeposition, zur Werkzeugmaschine 12 als Abgabeposition zu bewegen, und gleichbedeutend, Werkzeuge aus der Werkzeugmaschine 12 als Aufnahmeposition, zur Werkzeugablage 13 als Abgabeposition zu bewegen. Letztere Situation ist in Fig. 2 dargestellt.

Der Maschinentisch 16 weist eine Werkzeugaufnahme 17 auf, in welcher Bearbeitungswerkzeuge 18, insbesondere Biegewerkzeuge, angeordnet sind. Ebenso weist auch der Pressbalken 15 eine Werkzeugaufnahme 17 auf, in welcher auch Bearbeitungswerkzeuge 18 angeordnet sind.

In der Werkzeugaufnahme 17 sind an mehreren Bearbeitungspositionen 19 Bearbeitungswerkzeuge 18 angeordnet, wobei sich die im Typ unterscheiden können, sodass an den einzelnen Bearbeitungspositionen 19 unterschiedliche Bearbeitungen durchgeführt werden können. Zum Rüsten dieser Bearbeitungspositionen 19 müssen nun die Bearbeitungswerkzeuge 18 aus der Werkzeugaufnahme 17 entfernt und in einer Werkzeugablage 13 abgelegt werden bzw. umgekehrt aus der Werkzeugablage 13 entnommen, und in der Werkzeugaufnahme 17 angeordnet werden. Dazu ist vorgesehen, dass sich die Führungsbahn 4 in Längsrichtung der Werkzeugaufnahme 17 anschließend angeordnet ist und somit eine Verbindung zwischen der Werkzeugmaschine 12 und der Werkzeugablage 13 ausbildet. In dieser Führungsbahn ist die Werkzeug-Transfervorrichtung 1 beweglich angeordnet, wobei diese mittels eines an der Anschlussvorrichtung 10 angeordneten Manipulators in der Führungsbahn 4 bewegt wird. Gleichfalls ist möglich, dass die Werkzeug-Transfervorrichtung 1 Antriebsmittel aufweist, um sich selbsttätig in der Führungsbahn 4 bewegen zu können. Da die konkrete Ausführung für die weitere Betrachtung nicht von Bedeutung ist, wird hierin nicht weiter darauf eingegangen. Dem Fachmann sind Möglichkeiten bekannt, wie eine Werkzeug-Transfervorrichtung entlang einer Führungsbahn bewegt werden kann.

Da der Energiespeicher 8 der Werkzeug-Transfervorrichtung 1 zum Betrieb der Ansteuervorrichtung 7 und des Elektromagneten der Haltevorrichtung 5 bevorzugt wiederaufladbar ausgebildet ist, ist vorgesehen, dass die Werkzeug-Transfervorrichtung 1 in Beschickungspausen an eine Warteposition bewegt wird, sodass der Ladekontakt 9 der Werkzeug-Transfervorrichtung 1, mit einem Ladeanschluss 30 an der Warteposition in Verbindung gebracht wird. Somit erfolgt in Beschickungspausen ein automatisches Nachladen des Energiespeichers 8.

Fig. 1 zeigt die Situation, bei der die Werkzeug-Transfervorrichtung 1 ein Bearbeitungswerkzeug 18 aus der Bearbeitungsposition 19 aufgenommen hat. Dazu wurde die Werkzeug-Transfervorrichtung 1 zur Aufnahmeposition in unmittelbarer Nähe des angeordneten Bearbeitungswerkzeugs gebracht und von der Ansteuervorrichtung 7 die magnetische Haltevorrichtung 5 aktiviert und somit eine magnetische Haltekraft zwischen der Transfervorrichtung 1 und dem Bearbeitungswerkzeug 18 hergestellt. Um das Biegewerkzeug aus der Werkzeugaufnahme 17 entnehmen zu können, muss diese von einer Maschinensteuerung entriegelt bzw. freigegeben werden. Mit aktivierter, magnetischer Haltevorrichtung 5 bewegt die Werkzeug-Transfervorrichtung 1 das Bearbeitungswerkzeug 18 entlang der Führungsbahn 4 zur Abgabeposition, welche in diesem Fall die Werkzeugablage 13 ist.

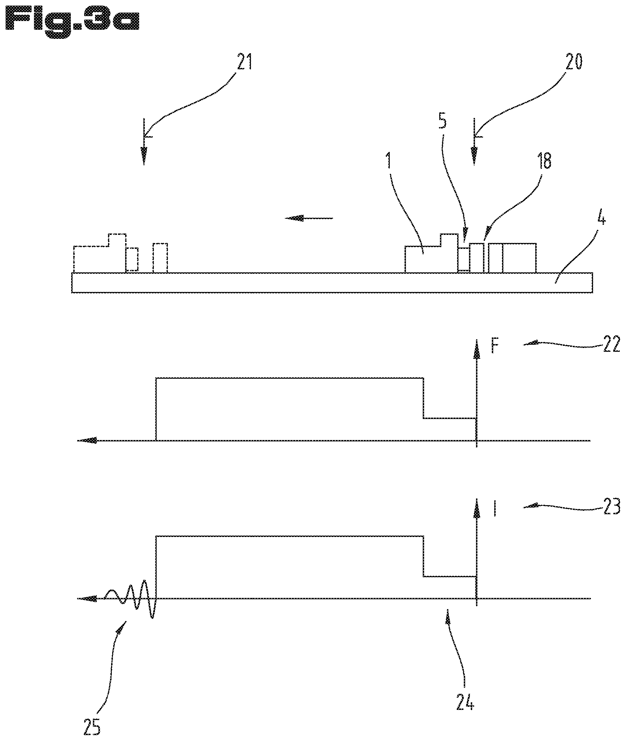

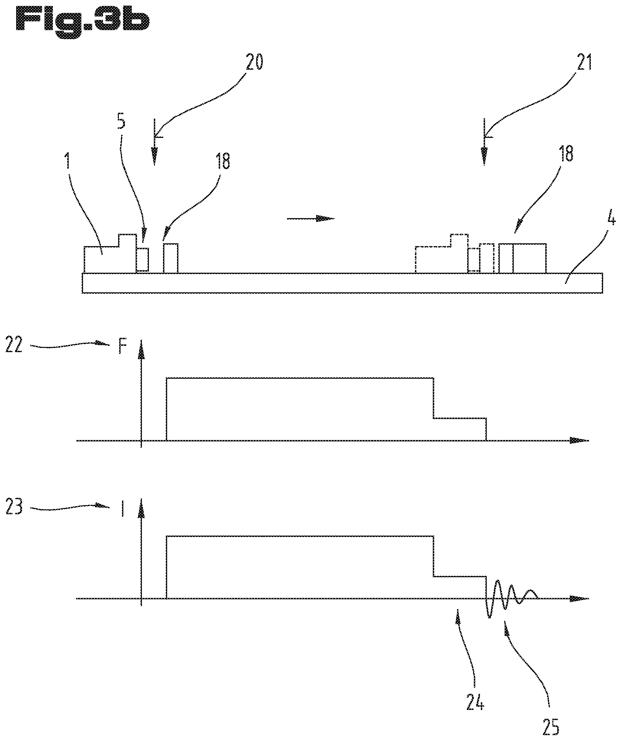

Die Fig. 3 zeigt nun verschiedene Varianten bei denen ein Bearbeitungswerkzeug 18 an einer Aufnahmeposition 20 aufgenommen wird und entlang der Führungsbahn 4 zu einer Abgabeposition 21 bewegt und dort abgegeben wird. Im oberen Diagramm ist die magnetische Haltekraft 22 und im unteren Diagramm der Ansteuerstrom 23 dargestellt, mit dem der Elektromagnet der Werkzeug-Transfervorrichtung von der Ansteuervorrichtung betrieben wird.

Fig. 3a zeigt die Aufnahme eines kleinen Bearbeitungswerkzeuges 18, wobei unter klein zu verstehen ist, dass das Bearbeitungswerkzeug 18 einerseits ein geringes Gewicht aufweist und vor allem in Richtung der Erstreckung der Führungsbahn 4 kurz ist. Bei derartigen kurzen Werkzeugen ist es möglich, dass bei Beaufschlagung der magnetischen Haltevorrichtung 5 mit großem Strom, und damit verbunden die Erzeugung eines starken Magnetfelds, das aufzunehmende Biegewerkzeug durchmagnetisiert wird und ein danach angeordnetes, zweites Biegewerkzeug ebenfalls gehalten wird. Somit besteht die Gefahr, dass statt des aufzunehmenden einen Werkzeuges, unerwünscht zwei oder gegebenenfalls weitere Biegewerkzeuge an der magnetischen Haltevorrichtung 5 der Werkzeug-Transfervorrichtung 1 haften bleiben. Um dies zu verhindern, ist gemäß der dargestellten Ausführung vorgesehen, dass in einem Abschnitt 24 der Elektromagnet mit einem geringeren Ansteuerstrom 23 beaufschlagt wird und somit auch nur eine entsprechend geringere magnetische Haltekraft 22 erzeugt. Sobald das Werkzeug aufgenommen und um einen Abstand von den restlichen, angeordneten Bearbeitungswerkzeugen 18 entfernt wurde, wird der Elektromagnet der Haltevorrichtung 5 von der Ansteuervorrichtung der Werkzeug-Transfervorrichtung 1, mit einem höheren Ansteuerstrom 23 beaufschlagt, wodurch auch die magnetische Haltekraft 22 erhöht wird. Dies bedeutet, dass das aufgenommene Werkzeug gut und fest gehalten wird, wodurch auch höhere Bewegungsgeschwindigkeiten entlang der Führungsbahn 4 möglich sind.

Durch das Einwirken der magnetischen Haltekraft 22 auf das aufgenommene Bearbeitungswerkzeug 18, sowie auf die magnetische Haltevorrichtung 5, kommt es in diesen zu einem Aufbau eines Restmagnetismus. Dieser würde sich ohne entsprechende Gegenmaßnahmen durch jeden Aufnahme- und Haltevorgang bis zu einem Maß verstärken, dass das Werkzeug und die Haltevorrichtung dauermagnetische Eigenschaften haben und somit eine zuverlässige Aufnahme und Abgabe nicht mehr möglich wird. Insbesondere kann es dann vorkommen, dass die Bearbeitungswerkzeuge 18 derart stark aneinander haften, dass sie ohne eine zusätzliche, mechanische Trennhilfe nicht mehr voneinander trennbar sind. Daher ist beim erfindungsgemäßen Beschickungsverfahren vorgesehen, dass an der Abgabeposition 21 ein Entmagnetisierungsvorgang durchgeführt wird, der beispielsweise darin besteht, dass der Elektromagnet der magnetischen Haltevorrichtung 5 mit einem Wechselstrom 25 mit abnehmender Amplitude beaufschlagt wird. Die Abnahme der Amplitude wird bevorzugt nach einer exp(-x) Verlauf erfolgen. Am Ende des Entmagnetisierungsvorgangs ist ein residuales Magnetfeld im Werkzeug bzw. in der Haltevorrichtung abgebaut, oder zumindest stark reduziert.

Fig. 3b zeigt eine Situation bei der ein kleines Bearbeitungswerkzeug 18 an der Aufnahmeposition 20 aufgenommen und zur Abgabeposition 21 bewegt wird, wobei an der Abgabeposition 21 bereits weitere Bearbeitungswerkzeuge 18 angeordnet sind. Um zu verhindern, dass an der Abgabeposition 21 ein vorhandenes Biegewerkzeug von dem mittels magnetischer Haltekraft von der Werkzeug-Transfervorrichtung 1 aufgenommenem Biegewerkzeug angezogen wird, ist ebenfalls vorgesehen, dass in einem Abschnitt 24 vor Erreichen der Abgabeposition 21, der Strom durch der Ansteuerstrom 23 und somit die Haltekraft 22 reduziert werden.

Auch hier wird bei Erreichen der Abgabeposition die magnetische Haltekraft 22 deaktiviert und durch Anlegen eines Wechselstroms 25 an den Elektromagneten der Haltevorrichtung 5 eine Entmagnetisierung durchgeführt.

Da in diesem Fall das Bearbeitungswerkzeug 18 von der Werkzeug-Transfervorrichtung 1 entlang der Führungsbahn 4 geschoben wird, ist gemäß einer weiteren Ausführung auch möglich, dass bereits nach Aufnahme des Bearbeitungswerkzeuges 18 an der Aufnahmeposition 20, die magnetische Haltekraft 22 deaktiviert und die Entmagnetisierung durchgeführt wird und hernach das Werkzeug lediglich an der Werkzeug-Transfervorrichtung 1 anliegt und von dieser zur Abgabeposition 21 geschoben wird.

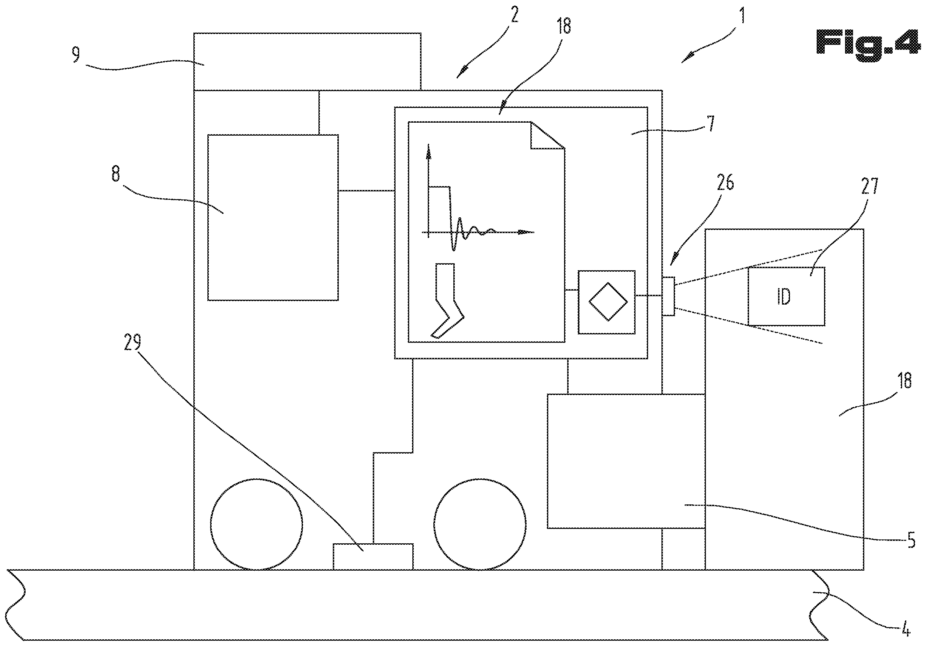

In Fig. 4 sind weitere mögliche Ausführungsvarianten dargestellt. Beispielsweise kann ein Erfassungsmittel 26 an der Werkzeug-Transfervorrichtung 1 vorgesehen sein, welches mit der Ansteuervorrichtung 7 verbunden ist und welches dazu ausgebildet ist, ein Kennzeichnungsmerkmal 27 des Bearbeitungswerkzeugs 18 auszulesen. Aus dem ausgelesenen Kennzeichnungsmerkmal 27 können von der Ansteuervorrichtung 7 Werkzeugkenndaten extrahiert werden, insbesondere eine Werkzeugform, ein Werkzeuggewicht und/oder eine Werkzeuglänge. In der Ansteuervorrichtung 7 kann beispielsweise in einem Speichermittel eine Tabelle 28 vorgesehen sein, in welcher Tabelle 28, basierend auf dem extrahierten Werkzeuggewicht, der Werkzeuggröße bzw. der Werkzeugform, Parameter für die Signalstärke des elektrischen Ansteuersignals zur Versorgung der magnetischen Haltevorrichtung 5 hinterlegt sind.

Zur Ermittlung der Position der Werkzeug-Transfervorrichtung 1 entlang der Führungsbahn 4, insbesondere zur Ermittlung der Aufnahme- bzw. Abgabeposition kann ferner vorgesehen sein, dass mit der Ansteuervorrichtung 7 ein Positionssensor 29 vorhanden ist. Dieser Positionssensor 29 kann beispielsweise eine an der Führungsbahn 4 angeordnete Markierung erfassen bzw. abtasten und daraus eine Position ermitteln.

Der Positionssensor 29 kann auch als Abstandssensor ausgebildet sein und bevorzugt am vorderen stirnseitigen Ende des Gehäuses 2 angeordnet sein. Dadurch kann die Transfervorrichtung eine Annäherung an ein Werkzeug selbständig erkennen, sodass an der Führungsbahn bzw. der Werkzeugmaschine keine zusätzlichen Vorrichtungen bzw. Markierungen vorgesehen sein müssen. Der Vorteil des gegenständlichen Beschickungsverfahrens bzw. der gegenständlichen Werkzeug-Transfervorrichtung liegt insbesondere darin, dass mittels einer einfachen und kompakten Vorrichtung ein schneller Werkzeugwechsel ermöglicht wird, insbesondere ohne Verwendung zusätzlicher Manipulatoren. Eine Rückwirkung durch den verwendeten Magnetismus auf das Werkzeug bzw. die Transfervorrichtung kann verhindert werden.

Abschließend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern der Umfang der Erfindung wird ausschließlich durch die beigefügten Ansprüche definiert.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Werkzeug-Transfervorrichtung
- 2: Außengehäuse
- 3: Führungsvorrichtung
- 4: Führungsbahn
- 5: Haltevorrichtung
- 6: Elektromagnet
- 7: Ansteuervorrichtung
- 8: Energiespeicher
- 9: Ladekontakt
- 10: Anschlussvorrichtung
- 11: Bearbeitungssystem
- 12: Werkzeugmaschine
- 13: Werkzeugablage
- 14: Maschinenrahmen
- 15: Pressbalken
- 16: Maschinentisch
- 17: Werkzeugaufnahme
- 18: Bearbeitungswerkzeug
- 19: Bearbeitungsposition
- 20: Aufnahmeposition
- 21: Abgabeposition
- 22: Haltekraft
- 23: Ansteuerstrom
- 24: Abschnitt
- 25: Wechselstrom
- 26: Erfassungsmittel
- 27: Kennzeichnungsmerkmal
- 28: Tabelle
- 29: Positionssensor
- 30: Ladeanschluss

## Patentansprüche

1. Beschickungsverfahren für eine Werkzeugmaschine (12), insbesondere für eine Biegemaschine,
mit
einer Werkzeug-Transfervorrichtung (1),
einer Werkzeugaufnahme (17) der Werkzeugmaschine (12), und
einer Werkzeugablage (13),
wobei
die Werkzeugaufnahme (17) und die Werkzeugablage (13) über eine Führungsbahn (4) verbunden sind, und
die Werkzeug-Transfervorrichtung (1) entlang der Führungsbahn (4) beweglich angeordnet ist,
und wobei
in der Werkzeugaufnahme (17) und/oder in der Werkzeugablage (13) Bearbeitungswerkzeuge (18) angeordnet sind, insbesondere Biegewerkzeuge, und
die Werkzeug-Transfervorrichtung (1) eine magnetische Haltevorrichtung (5) aufweist, umfassend die Schritte:
• Bewegen der Werkzeug-Transfervorrichtung (1) zu einem Bearbeitungswerkzeug (18), welches in einer Aufnahmeposition (20) in der Werkzeugaufnahme (17) oder in der Werkzeugablage (13) angeordnet ist;
• Aufnehmen und Halten des Bearbeitungswerkzeugs (18) mittels einer magnetischen Haltevorrichtung (5) der Werkzeug-Transfervorrichtung (1);
• Bewegen des aufgenommenen Bearbeitungswerkzeugs (18) entlang der Führungsbahn (4) zu einer Abgabeposition (21) in der Werkzeugablage (13) oder in der Werkzeugaufnahme (17);
• Abgeben des Bearbeitungswerkzeugs (18) durch Aufheben der magnetischen Haltekraft (22);
**dadurch gekennzeichnet, dass**
die magnetische Haltevorrichtung (5) einen Elektromagnet (6) mit einer elektronischen Ansteuervorrichtung (7) aufweist, wobei beim Aufheben der magnetischen Haltekraft (22), von der Ansteuervorrichtung (7) eine Entmagnetisierung durchgeführt wird und die Werkzeug-Transfervorrichtung (1) einen mit der Ansteuervorrichtung (7) verbundenen elektrischen Energiespeicher (8) und einen mit dem Energiespeicher (8) verbundenen Ladekontakt (9) aufweist, wobei nach Bewegung der Werkzeug-Transfervorrichtung (1) entlang der Führungsbahn (4) in eine Parkposition, der Ladekontakt (9) der Werkzeug-Transfervorrichtung (1) mit einem Ladeanschluss (30) der Warteposition in Verbindung gebracht wird.

2. Beschickungsverfahren nach Anspruch 1, **dadurch gekennzeichnet, dass** der Elektromagnet (6) beim Aufheben der Haltekraft (22), von der Ansteuervorrichtung (7) mit einem elektrischen Wechselstrom (25) mit abnehmender Signalamplitude beaufschlagt wird.

3. Beschickungsverfahren nach Anspruch 1 oder 2, **dadurch gekennzeichnet, dass** die magnetische Haltevorrichtung (5) zusätzlich einen Permanentmagnet aufweist, wobei der Elektromagnet (6) beim Aufheben der Haltekraft (22), von der Ansteuervorrichtung (7) mit einem gleichanteilbehafteten elektrischen Wechselsignal mit abnehmender Signalamplitude beaufschlagt wird.

4. Beschickungsverfahren nach einem der Ansprüche 1 bis 3, **dadurch gekennzeichnet, dass** bei der Aufnahme des Bearbeitungswerkzeugs (18), der Elektromagnet (6) von der Ansteuervorrichtung (7) mit einem elektrischen Aufnahme- und Haltesignal beaufschlagt wird.

5. Beschickungsverfahren nach Anspruch 4, **dadurch gekennzeichnet, dass** die Stärke des Aufnahme- und Haltesignals von der Ansteuervorrichtung (7) zwischen einer ersten Signalstärke bei der Aufnahme des Bearbeitungswerkzeugs (18), und einer zweiten Signalstärke beim Halten des Bearbeitungswerkzeugs (18) umgeschaltet wird.

6. Beschickungsverfahren nach Anspruch 5, **dadurch gekennzeichnet, dass** beim Halten des Bearbeitungswerkzeugs (18), die zweite Signalstärke des Aufnahme- und Haltesignals abgeschaltet wird.

7. Beschickungsverfahren nach einem der Ansprüche 5 oder 6, **dadurch gekennzeichnet, dass** vor Erreichen der Abgabeposition (21), die zweite Signalstärke des Aufnahme- und Haltesignals reduziert wird.

8. Beschickungsverfahren nach einem der Ansprüche 1 bis 7, **dadurch gekennzeichnet, dass** von einem, mit der Ansteuervorrichtung (7) verbundenem Erfassungsmittel (26), ein Kennzeichnungsmerkmal (27) des Bearbeitungswerkzeugs (18) ausgelesen wird, und daraus von der Ansteuervorrichtung (7) Werkzeug-Kenndaten extrahiert werden, insbesondere eine Werkzeugform, ein Werkzeuggewicht und/oder eine Werkzeuglänge.

9. Beschickungsverfahren nach Anspruch 8, **dadurch gekennzeichnet, dass** basierend auf dem extrahierten Werkzeuggewicht und/oder der Werkzeuglänge, von der Ansteuervorrichtung (7) die erste und/oder die zweite Signalstärke aus einer hinterlegten Parametertabelle ausgelesen werden.

10. Beschickungsverfahren nach einem der Ansprüche 1 bis 9, **dadurch gekennzeichnet, dass** das Aufnahme- und Haltesignal von der Ansteuervorrichtung (7) als PWM-Signal, oder PPM-Signal abgegeben wird.

11. Beschickungsverfahren nach einem der Ansprüche 1 bis 10, **dadurch gekennzeichnet, dass** die Werkzeug-Transfervorrichtung (1) einen mit der Ansteuervorrichtung verbundenen Positionssensor (29) aufweist, welcher die Position der Werkzeug-Transfervorrichtung (1) längs der Führungsbahn (4) ermittelt, und ein Erreichen der Aufnahmeposition (20) und/oder ein Erreichen der Abgabeposition (21) an die Ansteuervorrichtung übermittelt.

12. Beschickungsverfahren nach einem der Ansprüche 1 bis 11, **dadurch gekennzeichnet, dass** die Entmagnetisierung vor Erreichen der Abgabeposition (21) durchgeführt wird, insbesondere unmittelbar vor dem Erreichen der Abgabeposition (21).

13. Werkzeug-Transfervorrichtung für ein Beschickungsverfahren nach einem der Ansprüche 1 bis 12, umfassend
ein Außengehäuse (2),
eine Führungsvorrichtung (3) zur Aufnahme der Transfervorrichtung (1) in einer Führungsbahn (4),
eine, an einem vorderen stirnseitigen Ende des Gehäuses (2) angeordnete magnetische Haltevorrichtung (5), wobei die magnetische Haltevorrichtung (5) einen Elektromagnet (6) aufweist, **dadurch gekennzeichnet, dass** eine Ansteuervorrichtung (7) vorhanden ist, die zur Versorgung des Elektromagneten (6) mit einem elektrischen Entmagnetisierungssignal ausgebildet ist,
welches Entmagnetisierungssignal ein Wechselsignal mit abklingender Amplitude ist und dass im Außengehäuse (2) ein wieder aufladbarer Energiespeicher (8) vorhanden ist, der mit einem Ladekontakt (9) an einer Gehäuseaußenseite verbunden ist.

14. Werkzeug-Transfervorrichtung nach Anspruch 13, **dadurch gekennzeichnet, dass** das Außengehäuse (2) eine Energie- und/oder Datenschnittstelle aufweist.

15. Werkzeug-Transfervorrichtung nach einem der Ansprüche 13 oder 14, **dadurch gekennzeichnet, dass** an einem hinteren stirnseitigen Ende des Gehäuses eine Anschlussvorrichtung (10) für einen Manipulator vorgesehen ist.

16. Werkzeug-Transfervorrichtung nach einem der Ansprüche 13 bis 15, **dadurch gekennzeichnet, dass** die Führungsvorrichtung (3) einen Antrieb aufweist, der zur Bewegung der Transfervorrichtung entlang der Führungsbahn (4) ausgebildet ist.

17. Werkzeug-Transfervorrichtung nach einem der Ansprüche 13 bis 16, **dadurch gekennzeichnet, dass** die Ansteuervorrichtung (7) eine Tabelle aufweist, in welcher Werkzeug-Kenndaten und zugehörige Parameter eines Werkzeug Aufnahme- und Haltesignals hinterlegt sind.

18. Werkzeug-Transfervorrichtung nach einem der Ansprüche 13 bis 17, **dadurch gekennzeichnet, dass** ein zweiter Elektromagnet in einem Abschnitt an der Führungsbahn angeordnet ist.

## Claims

1. Loading method for a machine (12), in particular for a bending machine,
having
a tool transfer device (1),
a tool holder (17) of the machine tool (12), and
a tool rack (13),
wherein
the tool holder (17) and the tool rack (13) are connected via a guide track (4), and
the tool-transfer device (1) is arranged so as to be movable along the guide track (4), and wherein
machining tools (18), in particular bending tools, are arranged in the tool holder (17) and/or in the tool rack (13), and
the tool-transfer device (1) has a magnetic holding device (5),
comprising the steps:
• moving the tool-transfer device (1) to a machining tool (18), which is arranged in a pick-up position (20) in the tool holder (17) or in the tool rack (13);
• picking up and holding the machining tool (18) by means of a magnetic holding device (5) of the tool-transfer device (1);
• moving the picked-up machining tool (18) along the guide track (4) to a deposition position (21) in the tool rack (13) or in the tool holder (17);
• depositing the machining tool (18) by deactivation of the magnetic retaining force (22);
**characterized in that**
the magnetic holding device (5) has an electromagnet (6) having an electronic actuation device (7), wherein, upon deactivation of the magnetic retaining force (22), a demagnetization is performed by the actuation device (7) and the tool-transfer device (1) has an electrical energy reservoir (8) connected to the actuation device (7) and a charging contact (9) connected to the energy reservoir (8), wherein, after moving the tool-transfer device (1) along the guide track (4) into a parked position, the charging contact (9) of the tool-transfer device (1) is brought into connection with a charging terminal (30) of the waiting position.

2. The loading method according to claim 1, **characterized in that** the electromagnet (6), during deactivation of the retaining force (22), is subjected, by the actuation device (7), to an electrical alternating current (25) having a decreasing signal amplitude.

3. The loading method according to claim 1 or 2, **characterized in that** the magnetic holding device (5) additionally has a permanent magnet, wherein the electromagnet (6), during deactivation of the retaining force (22), is subjected, by the actuation device (7), to a direct-component-containing electrical alternating signal having a decreasing signal amplitude.

4. The loading method according to one of claims 1 to 3, **characterized in that**, when picking up the machining tool (18), the electromagnet (6) is subjected to an electrical pick-up and retention signal by the actuation device (7).

5. The loading method according to claim 4, **characterized in that** the strength of the pick-up and retention signal of the actuation device (7) is changed over between a first signal strength for picking up the machining tool (18) and a second signal strength for holding the machining tool (18).

6. The loading method according to claim 5, **characterized in that**, when holding the machining tool (18), the second signal strength of the pick-up and retention signal is disconnected.

7. The loading method according to one of claims 5 or 6, **characterized in that** the second signal strength of the pick-up and retention signal is reduced prior to reaching the deposition position (21).

8. The loading method according to one of claims 1 to 7, **characterized in that** an identification feature (27) of the machining tool (18) is read by a detection means (26) connected to the actuation device (7), and tool-characterizing data, in particular a tool shape, a tool weight and/or a tool length, are extracted from it by the actuation device (7).

9. The loading method according to claim 8, **characterized in that**, based on the extracted tool weight and/or the tool length, the first and/or the second signal strength is read by the actuation device (7) from a stored parameter table.

10. The loading method according to one of claims 1 to 9, **characterized in that** the pick-up and retention signal is emitted by the actuation device (7) as a PWM signal or PPM signal.

11. The loading method according to one of claims 1 to 10, **characterized in that** the tool-transfer device (1) has a position sensor (29) connected to the actuation device, which position sensor (29) determines the position of the tool-transfer device (1) along the guide track (4) and communicates a reaching of the pick-up position (20) and/or a reaching of the deposition position (21) to the actuation device.

12. The loading method according to one of claims 1 to 11, **characterized in that** the demagnetization is performed prior to reaching of the deposition position (21), in particular immediately prior to the reaching of the deposition position (21).

13. A tool-transfer device for a loading method according to one of claims 1 to 12, comprising
an outer housing (2),
a guide device (3) for picking up the transfer device (1) in a guide track (4),
a magnetic holding device (5) arranged on a front axial end of the housing (2), wherein
the magnetic holding device (5) has an electromagnet (6), **characterized in that** an actuation device (7) is present, which is designed for supplying the electromagnet (6) with an electrical demagnetization signal,
which demagnetization signal is an alternating signal having a declining amplitude, and **in that** a rechargeable energy reservoir (8), which is connected to a charging contact (9) on a housing outer side, is present in the outer housing (2).

14. The tool-transfer device according to claim 13, **characterized in that** the outer housing (2) has an energy and/or data interface.

15. The tool-transfer device according to one of claims 13 or 14, **characterized in that** a connection device (10) for a manipulator is provided at a rear axial end of the housing.

16. The tool-transfer device according to one of claims 13 to 15, **characterized in that** the guide device (3) has a drive, which is designed for moving the transfer device along the guide track (4).

17. The tool-transfer device according to one of claims 13 to 16, **characterized in that** the actuation device (7) has a table, in which tool-characterizing data and associated parameters of a tool pick-up and retention signal are stored.

18. The tool-transfer tool according to one of claims 13 to 17, **characterized in that** a second electromagnet is arranged in a section on the guide track.

## Revendications

1. Procédé d'alimentation pour une machine-outil (12), plus particulièrement pour une machine de pliage,
avec
un dispositif de transfert d'outil (1),
un logement d'outil (17) de la machine-outil (12) et
un porte-outil (13),
dans lequel
le logement d'outil (17) et le porte-outil (13) sont reliés par l'intermédiaire d'une piste de guidage (4) et
le dispositif de transfert d'outil (1) est disposé de manière mobile le long de la piste de guidage (4),
et dans lequel
dans le logement d'outil (17) et/ou dans le porte-outil (13), sont disposés des outils d'usinage (18), plus particulièrement des outils de pliage et
le dispositif de transfert d'outil (1) comprend un dispositif de maintien magnétique (5), comprenant les étapes suivantes :
• déplacement du dispositif de transfert d'outil (1) vers un outil d'usinage (18) qui est disposé, dans une position de logement (20), dans le logement d'outil (17) ou dans le porte-outil (13) ;
• logement et maintien de l'outil d'usinage (18) au moyen d'un dispositif de maintien magnétique (5) du dispositif de transfert d'outil (1) ;
• déplacement de l'outil d'usinage (18) logé le long de la piste de guidage (4) vers une position de dépôt (21) dans le porte-outil (13) ou dans le logement d'outil (17) ;
• dépôt de l'outil d'usinage (18) par l'annulation de la force de maintien magnétique (22) ;
**caractérisé en ce que**
le dispositif de maintien magnétique (5) comprend un électro-aimant (6) avec un dispositif de commande électronique (7), dans lequel, lors de l'annulation de la force de maintien magnétique (22), une démagnétisation est effectuée par le dispositif de commande (7) et le dispositif de transfert d'outil (1) comprend un accumulateur d'énergie électrique (8) relié avec le dispositif de commande (7) et un contact de charge (9) relié avec l'accumulateur d'énergie (8), dans lequel, après le déplacement du dispositif de transfert d'outil (1) le long de la piste de guidage (4) vers une position de stationnement, le contact de charge (9) du dispositif de transfert d'outil (1) est amené en liaison avec une borne de charge (30) de la position d'attente.

2. Procédé d'alimentation selon la revendication 1, **caractérisé en ce que** l'électro-aimant (6), lors de l'annulation de la force de maintien (22), est alimenté par le dispositif de commande (7) avec un courant électrique alternatif (25) avec une amplitude de signal décroissante.

3. Procédé d'alimentation selon la revendication 1 ou 2, **caractérisé en ce que** le dispositif de maintien magnétique (5) comprend en outre un aimant permanent, dans lequel 'électro-aimant (6), lors de l'annulation de la force de maintien (22), est alimenté par le dispositif de commande (7) avec un signal électrique alternatif à composant continue avec une amplitude de signal décroissante.

4. Procédé d'alimentation selon l'une des revendications 1 à 3, **caractérisé en ce que**, lors du logement de l'outil d'usinage (18), l'électro-aimant (6) est alimenté par le dispositif de commande (7) avec un signal électrique de logement et de maintien.

5. Procédé d'alimentation selon la revendication 4, **caractérisé en ce que** l'intensité du signal de logement et de maintien est commutée par le dispositif de commande (7) entre une première intensité de signal lors du logement de l'outil d'usinage (18) et une deuxième intensité de signal lors du maintien de l'outil d'usinage (18).

6. Procédé d'alimentation selon la revendication 5, **caractérisé en ce que**, lors du maintien de l'outil d'usinage (18), la deuxième intensité du signal de logement et de maintien est désactivée.

7. Procédé d'alimentation selon l'une des revendications 5 ou 6, **caractérisé en ce que**, avant que la position de dépôt (21) soit atteinte, la deuxième intensité su signal de logement et de maintien est réduite.

8. Procédé d'alimentation selon l'une des revendications 1 à 7, **caractérisé en ce qu'**un moyen de mesure (26) relié au dispositif de commande (7) lit une caractéristique d'identification (27) de l'outil d'usinage (18) et des données caractéristiques de l'outil en sont extraites par le dispositif de commande (7), plus particulièrement une forme d'outil, un poids d'outil et/ou une longueur d'outil.

9. Procédé d'alimentation selon la revendication 8, **caractérisé en ce que**, sur la base du poids de l'outil et/ou de la longueur de l'outil extraite, le dispositif de commande (7) lit la première et/ou la deuxième intensité de signal dans un tableau de paramètres enregistré.

10. Procédé d'alimentation selon l'une des revendications 1 à 9, **caractérisé en ce que** le signal de logement et de maintien est émis par le dispositif de commande (7) sous la forme d'un signal PWM ou d'un signal PPM.

11. Procédé d'alimentation selon l'une des revendications 1 à 10, **caractérisé en ce que** le dispositif de transfert d'outil (1) comprend un capteur de position (29) relié avec le dispositif de commande, qui détermine la position du dispositif de transfert d'outil (1) le long de la piste de guidage (4) et transmet au dispositif de commande un signal lorsque la position de logement (20) est atteinte et/ou lorsque la position de dépôt (21) est atteinte.

12. Procédé d'alimentation selon l'une des revendications 1 à 11, **caractérisé en ce que** la démagnétisation est effectuée avant que la position de dépôt (21) soit atteinte, plus particulièrement immédiatement avant que la position de dépôt (21) soit atteinte.

13. Dispositif de transfert d'outil pour un procédé d'alimentation selon l'une des revendications 1 à 12, comprend
un boîtier externe (2),
un dispositif de guidage (3) pour le logement du dispositif de transfert (1) dans une piste de guidage (4),
un dispositif de maintien magnétique (5) disposé à l'extrémité frontale avant du boîtier (2),
dans lequel
le dispositif de maintien magnétique (5) comprend un électro-aimant (6), **caractérisé en ce que**
un dispositif de commande (7) est présent qui est conçu pour l'alimentation de l'électro-aimant (6) avec un signal électrique de démagnétisation,
ce signal de démagnétisation étant un signal alternatif à amplitude décroissante et dans le boîtier externe (2), se trouve un accumulateur d'énergie rechargeable (8) qui est relié avec un contact de charge (9) sur un côté externe du boîtier.

14. Dispositif de transfert d'outil selon la revendication 13, **caractérisé en ce que** le boîtier externe (2) comprend une interface d'énergie et/ou de données.

15. Dispositif de transfert d'outil selon l'une des revendications 13 ou 14, **caractérisé en ce que**, à une extrémité frontale arrière du boîtier, est prévu un dispositif de raccordement (10) pour un manipulateur.

16. Dispositif de transfert d'outil selon l'une des revendications 13 à 15, **caractérisé en ce que** le dispositif de guidage (3) comprend un entraînement qui est conçu pour le déplacement du dispositif de transfert le long de la piste de guidage (4).

17. Dispositif de transfert d'outil selon l'une des revendications 13 à 16, **caractérisé en ce que** le dispositif de commande (7) comprend un tableau dans lequel sont enregistrées les données caractéristiques des outils et les paramètres correspondants d'un signal de logement et de maintien d'outil.

18. Dispositif de transfert d'outil selon l'une des revendications 13 à 17, **caractérisé en ce qu'**un deuxième électro-aimant est disposé dans une portion de la piste de guidage.
